# DEMANDE DE BREVET EUROPEEN

(11) **EP 4 304 031 A1**
(43) Date de publication de la demande: **10.01.2024**
(21) Numéro de dépôt: 23183531.5
(22) Date de dépôt: 05.07.2023
(51) Int. Cl.: H02G 13/00

(54) **PARATONNERRE À DISPOSITIF D'AMORÇAGE ET STRUCTURE ÉQUIPÉE D'UN TEL PARATONNERRE**

(30) Priorité: 06.07.2022 FR 2206914
(71) Demandeur: Da Cruz Sousa Cruz Rousseau, Fernanda Maria, 22100 Quevert (FR)
(72) Inventeur: Da Cruz Sousa Cruz Rousseau, Fernanda Maria, 22100 Quevert (FR)
(74) Mandataire: Lavoix

(57) **Abrégé**

Ce paratonnerre (2) à dispositif d'amorçage comprend un corps (4) électriquement conducteur apte à émettre des décharges d'effluves formant un courant précurseur ascendant. Ce corps est relié à la terre (PT1, PT2), en parallèle, d'une part, à travers un éclateur principal (10) et, d'autre part, à travers un circuit de limitation et de contrôle d'un courant d'effluve circulant dans ce corps. Le circuit de limitation et de contrôle (20) comprend, en série, une inductance (22) et une ensemble (24) formé, en parallèle, d'une condensateur (26) et d'un éclateur de limitation (28). Le corps électriquement conducteur (4) et le circuit de limitation et de contrôle (20) sont séparés spatialement en étant respectivement montés en partie supérieure (T) et à la base (B) d'une structure de support (I). Le corps électriquement conducteur (4) et le circuit de limitation et de contrôle sont reliés par un premier conducteur (12) isolé comprenant une âme en matériau électriquement conducteur recouverte d'un isolant. Un éclateur secondaire est raccordé entre le premier conducteur isolé (12) et la terre (PT2), en parallèle du circuit de limitation et de contrôle, à travers un autre conducteur (16).

## Description

La présente invention concerne un paratonnerre à dispositif d'amorçage, ainsi qu'une structure, telle qu'un immeuble, équipée d'un tel paratonnerre.

Un paratonnerre à dispositif d'amorçage est un système de protection d'une structure, telle qu'un immeuble, contre les impacts de foudre. Un tel paratonnerre est prévu pour générer, de façon précoce, un « courant précurseur ascendant », autrement dit un « courant d'effluve » ou un « leader ascendant », en direction d'un choc de foudre, de façon à créer un cheminement préférentiel de la foudre, évitant ainsi que la structure sur laquelle est monté ce paratonnerre ne soit pas endommagée par la foudre. Cette génération précoce d'un courant d'effluve permet de rendre le paratonnerre à dispositif d'amorçage plus efficace qu'une simple pointe de Franklin, car les charges de ce courant d'effluve montent à la rencontre d'un nuage et permettent de fixer l'impact de foudre en un point déterminé, bien plus tôt que ne le ferait une pointe de Franklin.

Un paratonnerre à dispositif d'amorçage est connu de WO-A-02/43216 et donne globalement satisfaction. Ce paratonnerre comprend un corps électriquement conducteur prévu pour émettre des charges d'effluves formant un courant précurseur ascendant et qui est relié à la terre, en parallèle, d'une part à travers un éclateur principal et, d'autre part, à travers un circuit de pilotage du paratonnerre qui réalise la limitation et le contrôle d'un courant d'effluve qui circule dans le corps électriquement conducteur, ce circuit étant localisé dans ce corps conducteur.

Le corps électriquement conducteur est généralement installé en partie haute de la structure, par exemple sur le toit d'un immeuble, sur un édicule ou sur un acrotère. Pour des raisons de sécurité et d'efficacité, ce corps électriquement conducteur est le plus souvent disposé dans une zone difficile d'accès, en hauteur. Comme le circuit de limitation et de contrôle est monté dans un tube solidarisé au corps électriquement conducteur, ce circuit est également disposé en hauteur, et le plus souvent, dans une zone d'accès difficile. Ceci peut s'avérer problématique lorsqu'il convient de procéder à une opération de contrôle ou de maintenance sur ce circuit, car l'opérateur doit se déplacer dans la zone concernée, par exemple sur le toit d'un immeuble, et prendre des précautions pour pouvoir travailler en hauteur et en sécurité, par exemple avec un équipement de protection individuelle adapté. On pourrait envisager que l'opérateur effectue des opérations de vérification du circuit de limitation et de contrôle à distance, mais ce genre de vérification est moins fiable qu'une vérification au plus près de ce circuit, car cette opération à distance nécessite généralement un dispositif de communication à distance, généralement optique ou électrique, localisé de façon permanente au niveau du corps conducteur et donc soumis à des influences atmosphériques, dont un champ électromagnétique, la pollution et le soleil, qui diminuent grandement la durée de vie du dispositif de communication à distance et donc du paratonnerre.

C'est à ces inconvénients qu'entend plus particulièrement remédier l'invention en proposant un nouveau paratonnerre à dispositif d'amorçage dont la maintenance est facilitée.

À cet effet l'invention concerne, selon un premier aspect, un paratonnerre à dispositif d'amorçage comprenant un corps électriquement conducteur apte à émettre des décharges d'effluves formant un courant précurseur ascendant, le corps électriquement conducteur étant relié à la terre, en parallèle, d'une part, à travers un éclateur principal et, d'autre part, à travers un circuit de limitation et de contrôle d'un courant d'effluve circulant dans le corps électriquement conducteur, ce circuit de limitation et de contrôle comprenant, en série, une inductance et une ensemble formé, en parallèle, d'une condensateur et d'un éclateur de limitation. Conformément à l'invention,
- le corps électriquement conducteur et le circuit de limitation et de contrôle sont séparés spatialement en étant respectivement montés en partie supérieure d'une structure de support et à la base de la structure de support, qui supporte le paratonnerre,
- le corps électriquement conducteur et le circuit de limitation et de contrôle sont reliés par un premier conducteur isolé comprenant une âme en matériau électriquement conducteur recouverte d'un isolant et
- un éclateur secondaire est raccordé entre le premier conducteur isolé et la terre, en parallèle du circuit de limitation et de contrôle, à travers un deuxième conducteur.

Grâce à l'invention, le fait de séparer spatialement le corps électriquement conducteur et le circuit de limitation et de contrôle évite de devoir disposer ce circuit en hauteur, dans une zone potentiellement difficile d'accès. La maintenance du paratonnerre en est facilitée. En fait, un élément important est que la partie supérieure soit le point haut du bâtiment pour capter la foudre au plus tôt et que la base soit facilement accessible, éventuellement avec un contrôle d'accès pour éviter que n'importe qui y touche. En séparant spatialement le corps électriquement conducteur et le circuit de limitation et de contrôle, on obtient des bénéfices au niveau de
- la capture d'un éclair. On pourra facilement vérifier visuellement cette fonction à distance sans avoir besoin d'aller au contact des éléments qui la compose. Ces vérifications sont périodiques, généralement annuelles. Des vérifications visuelles suffisent car les éléments en question sont juste des pièces de métal. Ces vérifications peuvent éventuellement être effectuées avec des jumelles.
- le circuit de limitation et de contrôle, qui est plus fragile que le métal car il comprend des composants électrique ou électroniques. On pourra vérifier facilement ce circuit lors des inspection périodiques car ce circuit de limitation et de contrôle est accessible sans nacelle ou moyen d'élévation équivalent.

Il est significatif que la partie difficilement accessible ne nécessite pas de vérification autre que visuelle et que la partie facilement accessible, disposée au sol ou en terrasse, puisse être vérifiée facilement.

Un autre aspect important de l'invention est la possibilité de modifier les caractéristiques du paratonnerre à distance, par simple modification du circuit de limitation et de contrôle qui est facilement accessible.

D'autre part, l'éclateur secondaire permet de protéger le circuit de limitation et de contrôle vis-à-vis des courants de fort ampérage qui circulent dans le conducteur isolé comprenant une âme recouverte d'un isolant, en cas d'impact de foudre, et permet également de répondre aux exigences usuelles d'avoir deux conducteurs de descente reliés au paratonnerre.

Selon des aspects avantageux mais non obligatoires de l'invention, un tel paratonnerre à dispositif d'amorçage peut incorporer une ou plusieurs des caractéristiques suivantes, prises selon toute combinaison techniquement admissible :
- Le circuit de limitation et de contrôle est disposé à l'intérieur d'un coffret de protection fixé à la base de la structure de support.
- L'éclateur secondaire est disposé à l'intérieur du coffret de protection.
- Le coffret contient également au moins un dispositif de test du circuit de limitation et de contrôle, et/ou un compteur de chocs de foudre reçus par le paratonnerre sur une période donnée et/ou un module de communication.
- Le paratonnerre comprend un module de batteries et/ou un système photovoltaïque d'alimentation électrique du dispositif de test, du compteur de chocs de foudre et/ou ou du module de communication.
- Le coffret porte, en façade, un afficheur d'un état détecté par le dispositif de test, de préférence sous la forme de diodes électroluminescentes de couleurs différentes.
- Le paratonnerre comprend un compteur de coups de foudre disposé sur le premier conducteur ou sur un autre conducteur reliant l'éclateur secondaire et la terre.
- La tension d'amorçage nominale de l'éclateur secondaire est strictement supérieure à la tension maximale de sortie du circuit de limitation et de contrôle.
- La tension d'amorçage nominale de l'éclateur secondaire est du même ordre de grandeur que la tension d'amorçage nominale de l'éclateur principal.
- Le courant de décharge maximum de l'éclateur secondaire est du même ordre de grandeur que le courant de décharge maximum de l'éclateur principal.

Selon un deuxième aspect, l'invention concerne une structure équipée d'un paratonnerre tel que mentionné ci-dessus, dans laquelle le corps électriquement conducteur du paratonnerre est monté en partie supérieure de la structure et le circuit de limitation et de contrôle est monté à la base de la structure.

Selon d'autres aspects avantageux mais non obligatoires de l'invention, une telle structure peut incorporer une ou plusieurs des caractéristiques suivantes, prises selon toute combinaison techniquement admissible :
- la structure est un immeuble, la partie supérieure sur laquelle est monté le corps électriquement conducteur est le toit de l'immeuble et la base, au niveau de laquelle est monté le circuit de limitation et de contrôle est située au pied de l'immeuble.
- la structure est un immeuble, la partie supérieure sur laquelle est monté le corps électriquement conducteur est le toit de l'immeuble et la base, au niveau de laquelle est monté le circuit de limitation et de contrôle est située sur une terrasse.
- la terrasse est accessible à travers une porte, de préférence équipée d'un moyen de contrôle d'accès.
- la structure est un pylône, une grue, une charpente, un édicule ou une façade et la partie supérieure sur laquelle est monté le corps électriquement conducteur est un élément de la structure et la base est située au niveau du sol.

L'invention sera mieux comprise et d'autres avantages de celle-ci apparaitront plus clairement à la lumière de la description qui va suivre de deux exemples d'implantation d'un paratonnerre à dispositif d'amorçage conforme à son principe, donnée uniquement à titre d'exemple et faite en référence aux dessins annexés dans lesquels :
[Fig.1] La figure 1 est une représentation schématique d'un premier paratonnerre à dispositif d'amorçage conforme à l'invention, installé sur un premier immeuble ;
[Fig.2] La figure 2 est une représentation schématique d'un coffret de protection appartenant au paratonnerre de la figure 1 ;
[Fig.3] La figure 3 est une représentation schématique analogue à la figure 2, pour un coffret de protection appartenant à paratonnerre conforme à un deuxième mode de réalisation ; et
[Fig.4] La figure 4 est une vue analogue à la figure 1 pour un paratonnerre conforme à un troisième mode de réalisation installé sur un deuxième immeuble.

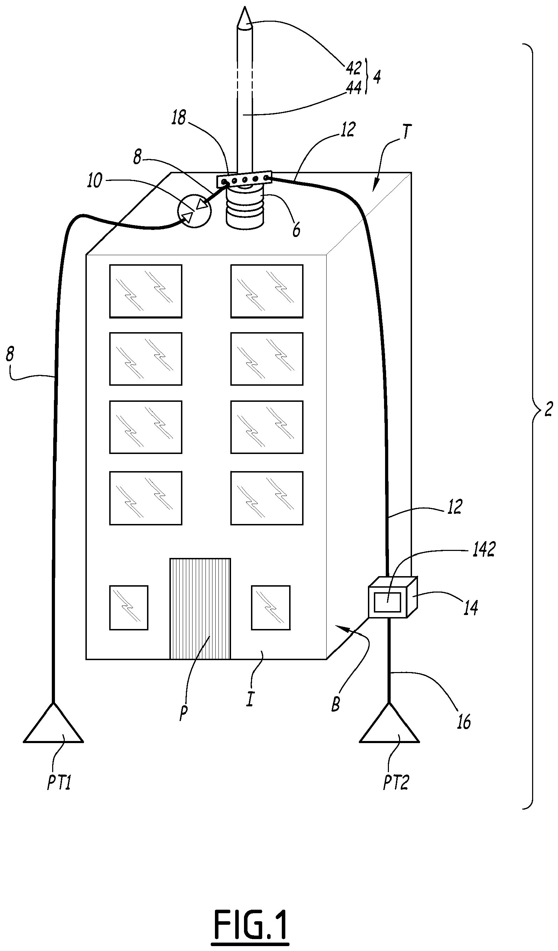

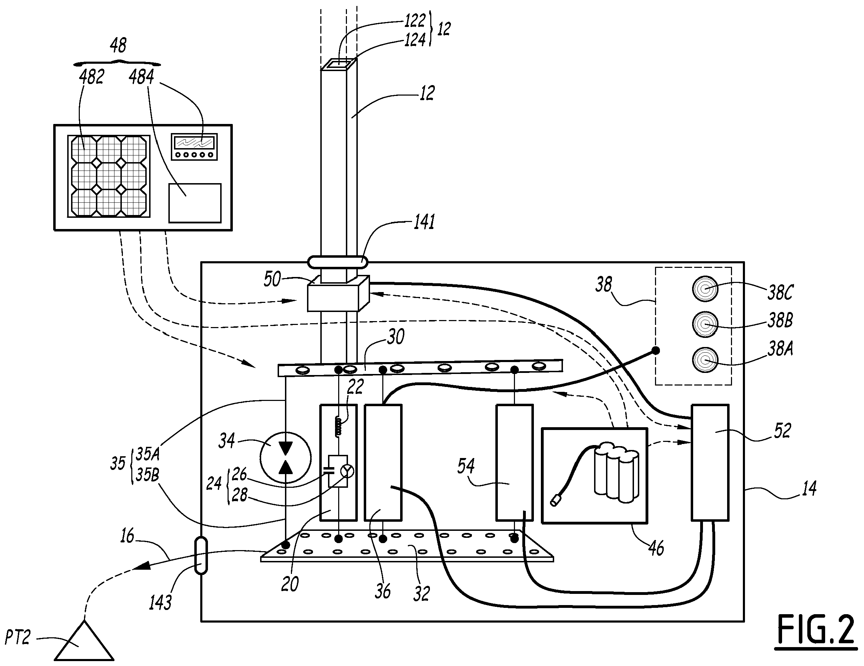

Le paratonnerre 2 représenté sur les figures 1 et 2 comprend un corps 4 en matériau électriquement conducteur, par exemple en acier. Ce corps 4 comprend un dispositif de capture électriquement conducteur 42 et un élément cylindrique électriquement conducteur 44, de préférence réalisés dans le même matériau.

Le corps 4 est monté sur le toit T d'un immeuble 1 en étant supporté par un support isolant 6. On note P une porte d'entrée dans l'immeuble I. Le support isolant 6 est avantageusement réalisé dans un matériau synthétique, tel que la porcelaine, une céramique, une résine époxy, polyester, etc. Ce support isolant 6 n'a pas pour fonction d'isoler le corps électriquement conducteur 4 de la terre en cas de choc de foudre mais d'isoler ce corps pour permettre à un circuit de limitation et de contrôle d'un courant d'effluve de fonctionner correctement, comme expliqué ci-après. En conséquence, une hauteur relativement faible du support isolant 6 est envisageable, par exemple de l'ordre de 1 cm. Toutefois, ce support isolant doit également résister aux contraintes mécaniques imposées par le corps électriquement conducteur 4, notamment sous l'effet des conditions météorologiques comme la pluie et de la pollution et peut présenter ainsi une ou plusieurs ailettes en fonction de l'emplacement où il est installé, par exemple en bord de mer ou dans une usine. En pratique, le support isolant 6 peut avoir une hauteur de 10 cm, voire plus.

Le corps électriquement conducteur 4 est relié à une première prise de terre PT1 par un conducteur électrique 8 sur lequel est interposé un éclateur principal 10. En pratique, l'éclateur principal 10 est installé à proximité du corps électriquement conducteur 4, sur le toit T, au voisinage du support isolant 6.

L'éclateur principal 10 est un éclateur de forte capacité capable de conduire un courant de décharge compris entre 100 et 200 kiloampères (kA). L'éclateur principal 10 peut être un éclateur à air formé par deux électrodes se faisant face, avec une distance compatible avec la tension d'amorçage nominale désirée pour cet éclateur, qui peut être choisie égale à 10 kilovolts (kV). En variante, l'éclateur principal 10 peut être un éclateur du commerce avec une tension d'amorçage nominale et une tenue au courant suffisantes pour résister à un choc de foudre. Dans ce cas, la tension d'amorçage nominale de l'éclateur principal est, en général, de l'ordre de 3 kV, ce qui peut imposer d'utiliser deux ou plus de deux éclateurs du commerce en série pour constituer l'éclateur principal 10.

Dans l'exemple des figures, l'éclateur principal 10 est disposé à proximité du corps électriquement conducteur 4 et du support isolant 6, ce qui permet en outre de protéger l'isolant 6 de la décharge de foudre.

Le conducteur 8 en cuivre ou matériau conducteur équivalent sert à évacuer le courant dû à un impact de foudre et n'a pas à être isolé électriquement vis-à-vis de l'extérieur. Dans le mode de réalisation représenté sur les figures, le conducteur 8 est dépourvu d'isolant. Il présente une section d'aire minimale de 50 mm². Cette section minimale peut être plus grande, par exemple 70 mm², pour d'autres matériaux que le cuivre ou pour des conducteurs multibrins par exemple.

En variante non représentée, le conducteur 8 comprend une âme électriquement conductrice recouverte d'une gaine isolante.

Le corps électriquement conducteur 4 est raccordé, par un conducteur électrique 12, en cuivre ou matériau conducteur équivalent, à un coffret 14. Le coffret 14 est fixé à la base B de l'immeuble I, de sorte qu'il est facilement accessible pour un opérateur chargé de la surveillance ou de la maintenance du paratonnerre 2. Le coffret 14 est lui-même raccordé à une deuxième prise de terre PT2, par un autre conducteur électrique 16 qui a une section d'aire minimale de 50 mm² également et qui, dans l'exemple des figures, est identique au conducteur 8, c'est-à-dire dépourvu d'isolant. Le conducteur électrique 12 est un conducteur isolé, en ce sens qu'il comprend une âme 122 en matériau électriquement conducteur, notamment en cuivre, ainsi qu'une gaine 124 électriquement isolante qui entoure l'âme 122. La gaine 124 forme donc un isolant pour l'âme 122. L'âme 122 peut être formée par un ruban plat dont la section rectangulaire visible à la figure 2 présente une section d'aire supérieur ou égale à 50 mm² ou par un conducteur rond de diamètre supérieur ou égal à 8 mm. Le conducteur électrique 12 peut être obtenu par l'insertion d'une âme dans un isolant ou par extrusion d'un isolant autour de l'âme. La gaine 124 peut être réalisée en matériau synthétique, notamment en PVC. La gaine 124 n'a pas à être dimensionnée pour assurer une fonction d'isolation en cas de choc de foudre, mais uniquement pour assurer une telle fonction lors de la création d'un courant précurseur ascendant, c'est-à-dire d'un courant d'effluve ou d'un leader ascendant. Afin de le différencier d'un conducteur isolé destiné à assurer une fonction d'isolation y compris en cas de choc de foudre, le deuxième conducteur 12 peut être dénommé « conducteur faiblement isolé ».

Un tel conducteur faiblement isolé est un produit du commerce dont la gaine 124 existe en plusieurs couleurs, ce qui facilite son intégration visuelle sur l'immeuble I.

Le conducteur faiblement isolé 12 s'étend depuis la base du corps électriquement conducteur 4 jusqu'au niveau du coffret 14.

En variante, le conducteur 16 est un conducteur comprenant une âme et une gaine isolante, comparable au deuxième conducteur 12.

En pratique, le raccordement entre le corps électriquement conducteur 4 et les premier et deuxième conducteurs électriques 8 et 12 peut être effectué au moyen d'une barrette électriquement conductrice 18 sur laquelle est fixé le corps électriquement conducteur 4 et qui repose sur le support isolant 6. Chacun des conducteurs électriques 8 et 12 est, quant à lui, raccordé électriquement sur la barrette 18.

En variante, d'autres façons de raccorder ensemble les éléments 4, 8 et 12 peuvent être mises en oeuvre, notamment grâce à des cosses terminant chacun des conducteurs et insérés dans une tige filetée reliant le corps électriquement conducteur 4 au support isolant 6.

Les deux conducteurs 8 et 12 sont fixés sur l'immeuble 1 au moyen d'éléments de fixation, non représentés et connus en soi. Les éléments fixations du conducteur 12 peuvent être également en matériau plastique, par exemple en PVC, ce qui réalise avantageusement une isolation électrique complémentaire entre l'âme 122 et l'immeuble I.

Le corps électriquement conducteur 4 est, quant à lui, maintenu en position par rapport au toit T par le support isolant 6 et par d'autres moyens mécaniques non-représentés, qui peuvent inclure des pattes de fixation ou des haubans. Dans ce cas les haubans ne sont pas métalliques et sont, par exemple, en fibres de verre. D'autre part, les pattes de fixation peuvent être métalliques et rendues isolantes via des manchons isolants, par exemple en PVC.

Le coffret 14 renferme des matériels électriques et électroniques qu'il protège vis-à-vis des intempéries. C'est pourquoi, un joint d'étanchéité 141 est installé autour du deuxième conducteur électrique 12, au niveau de sa traversée de cloison entre l'intérieur et l'extérieur du coffret 14. Selon un aspect de l'invention qui n'est pas représenté, un joint d'étanchéité analogue au joint d'étanchéité 141 est installé, autour du conducteur électrique 16, dans la zone où il traverse une cloison du coffret 14. Le joint d'étanchéité 141 peut être un presse-étoupe ou un autre matériel équivalent.

Le volume intérieur du coffret 14 est accessible en manoeuvrant une porte 142, montée sur une face avant du coffret 14 et qui est, le plus souvent, immobilisée en position fermée au moyen d'une serrure ou d'un cadenas non représenté. Pour la clarté du dessin, la porte 142 et la face avant ne sont pas représentées à la figure 2.

Un circuit 20 de limitation et de contrôle d'un courant d'effluve destiné à circuler dans le corps électriquement conducteur 4 est installé dans le coffret 14. Ce circuit 20 est du même type et assure la même fonction que le circuit portant le même nom décrit dans WO-A-02/43216 dont l'enseignement technique est inclus par référence. Le circuit 20 permet de commander le courant d'effluve et peut, à ce titre, être qualifié de circuit de commande. Pour la même raison, le coffret peut être qualifié de coffret de commande.

Le circuit 20 comprend en série, une inductance 22 et un ensemble 24 formé, en parallèle, d'un condensateur 26 et d'un éclateur de limitation 28.

Le circuit 20 est relié au deuxième conducteur électrique 12 à travers une barrette 30 et au conducteur électrique 16 à travers une autre barrette 32.

Un éclateur secondaire 34 est raccordé électriquement aux barrettes 30 et 32, par deux brins 35A et 35B d'un autre conducteur électrique 35, en parallèle au circuit 20.

L'autre conducteur électrique 35 a une section d'aire minimale de 50 mm² et peut être identique au conducteur 8. En variante, il est identique au conducteur électrique 16. Selon une autre variante, il s'agit d'un conducteur électrique différent mais toujours avec une section minimale de 50 mm².

Cet éclateur secondaire 34 a pour fonction de protéger le circuit 20 de limitation et de contrôle du courant d'effluve et il est installé au plus près de ce circuit, dans le coffret 14.

L'éclateur secondaire 34 est un éclateur de forte capacité pouvant conduire un courant de décharge compris entre 100 et 200 kA. En pratique, l'éclateur secondaire 34 peut être un éclateur du commerce, par exemple un éclateur encapsulé, avec une tension d'amorçage nominale strictement supérieure à la tension maximale de sortie du circuit 20, pour que ce circuit puisse fonctionner correctement. Une telle tension d'amorçage nominale est avantageusement de l'ordre de 2,5 kV. Elle peut être obtenue en réalisant l'éclateur secondaire 34 par la mise en série de plusieurs éclateurs unitaires.

Ainsi, la tension d'amorçage nominale de l'éclateur secondaire 34 est du même ordre de grandeur que la tension d'amorçage nominale de l'éclateur principal 10. Par « du même ordre de grandeur », on entend qu'un rapport entre les tensions d'amorçage nominales des deux éclateurs 10 et 34 est compris entre 1 et 5.

L'éclateur secondaire 34 est, de préférence, installé dans le coffret 14, notamment quand il s'agit d'un éclateur du commerce.

Pour un éclateur non-encapsulé, c'est-à-dire dans l'air, il est préférable de l'installer en dehors du coffret 14.

De façon avantageuse, le coffret 14 comprend également un dispositif 36 de test du circuit 20 de limitation et de contrôle, ce dispositif 36 étant connecté, en parallèle au circuit 20 et à l'éclateur secondaire 34, entre les barrettes 30 et 32.

Le dispositif de test 36 est en pratique un circuit électronique qui permet d'injecter dans le circuit 20 des signaux de contrôle. Avantageusement, le dispositif de test 36 est associé à un afficheur 38. Avantageusement, l'afficheur 38 comprend trois diodes électroluminescentes ou DELs 38A, 38B, 38C de couleurs différentes. Par exemple, la diode 38A est de couleur rouge, la diode 38B est de couleur verte et la diode 38C est de couleur jaune. L'afficheur 38 est monté en façade du coffret 14 et permet de prendre connaissance du résultat d'un test effectué par le dispositif de test 36, sans devoir ouvrir la porte 142. Un signal lumineux de couleur spécifique peut être affiché en fonction d'un résultat du test, par exemple rouge quand le circuit 20 est en panne, vert quand il fonctionne correctement et jaune quand le dispositif de test 36 lui-même ou son alimentation est en panne.

Par « en façade » on entend que l'afficheur 38 est visible sur une des faces extérieures du coffret 14 qui n'est pas nécessairement la face avant dans laquelle est ménagée l'ouverture fermée par la porte 142, même si tel est le cas dans l'exemple des figures.

Le dispositif de test 36 est, de préférence, alimenté en énergie électrique par un module de batteries 46 et/ou par un système photovoltaïque 48, qui comprend au moins un panneau photovoltaïque 482 et des organes de conversion de courant associés 484. À la figure 2, les raccordements électriques entre les organes d'alimentation électrique 46 et 48, d'une part, et le dispositif de test 36, d'autre part, sont représentés par des flèches en pointillé. Le paratonnerre de l'invention peut comprendre l'un ou l'autre des matériels 46 et 48 ou ces deux matériels à la fois. En variante, le système photovoltaïque 48 peut être raccordé au module de batteries 46 pour l'alimenter et c'est ce module de batteries qui alimente lui-même le dispositif de test 36.

Le dispositif de test 36 est optionnel. Il peut également être raccordé au circuit 20 uniquement lors des opérations de maintenance et par exemple annuellement.

De façon avantageuse, un compteur de coups de foudre 50 est installé entre l'entrée du conducteur 12 dans le coffret 14, qui est matérialisée par le joint d'étanchéité 141, et la barrette 30. Il permet de compter le nombre de chocs de foudre reçus par le paratonnerre 2, ce qui permet de déclencher en temps utile une opération de maintenance de ce paratonnerre. Le compteur de coups de foudre 50 peut ne compter que les coups de foudre. Dans ce cas, il peut s'agir d'un compteur électromécanique ou d'un compteur électronique. En variante, ce compteur de coups de foudre 50 peut également compter l'énergie des chocs de foudre reçus par le paratonnerre 2 et/ou dater ces chocs de foudre. Dans ce cas, le compteur 50 est un compteur électronique. Lorsque le compteur 50 est un compteur électronique, il doit être alimenté en énergie électrique. Il est alors avantageusement fait usage du module de batteries 46 et/ou du système photovoltaïque 48. Dans ce cas, le module de batteries 46 et/ou le système photovoltaïque 48 sont dimensionnés pour alimenter toutes les fonctions qui en ont besoin dans le coffret 14.

À cet égard, le circuit 20 de limitation et de contrôle est usuellement non alimenté électriquement car c'est le champ électrique associé au nuage orageux qui lui sert d'alimentation. Il est toutefois possible d'envisager un circuit 20 de limitation et de contrôle alimenté par une source de courant extérieure. Dans ce cas, cette source extérieure peut être le module de batteries 46 et/ou le système photovoltaïque 48.

De façon avantageuse et optionnelle, le coffret 14 comprend également un module de communication 52 qui permet de transmettre à distance, via une antenne non représentée ou une liaison filaire, une information sur l'état du circuit de limitation et de contrôle 20, du dispositif de test 36, du nombre, de l'énergie ou de la date des chocs de foudre ou tout autre information collectée dans le coffret 14. Ce module de communication 52 est raccordé au dispositif de test 36 et peut également être raccordé au compteur de coups de foudre 50 lorsqu'il est présent.

Selon un aspect avantageux et optionnel de l'invention, un autre équipement électrique ou électronique 54 peut être installé dans le coffret 14, pour assurer une autre fonction, telle que, par exemple, une détection du fonctionnement du circuit de limitation et de contrôle 20, ce fonctionnement étant annonciateur d'un choc de foudre, ce qui peut permettre de déclencher à temps des mesures de prévention. Dans ce cas, cet équipement 54 est avantageusement également raccordé au module de communication 52.

À la figure 2, le matériel 54 est représenté, en étant installé entre les barrettes 30 et 32 et raccordés à celles-ci. Ceci n'est toutefois pas obligatoire.

Au sein du coffret 14, les matériels 20, 36, 50, 52 et 54 peuvent être alimentés par le module de batteries 46 et/ou le système photovoltaïque 48.

Aucun des matériels 36, 50, 52 et 54 ne doit empêcher le fonctionnement du circuit 20. Ces matériels sont généralement installés dans le coffret 14, ce qui les protège des intempéries et permet également de les raccorder facilement à une alimentation située dans ou au voisinage du coffret 14, notamment les sources d'alimentation 46 et/ou 48, quand cela est nécessaire à leur fonctionnement.

Les deux éclateurs 10 et 34 ne fonctionnent pas en même temps. En cas de choc de foudre, le premier éclateur à fonctionner est l'éclateur secondaire 34 qui est situé dans le coffret de commande 14. Dès que cet éclateur 34 a amorcé, un courant électrique d'intensité importante circule dans le deuxième conducteur 12, ce qui impose une tension élevée sur l'éclateur principal 10 qui est situé au pied du corps électriquement conducteur 4. L'éclateur principal 10 amorce alors et devient conducteur. Dès lors, le conducteur électrique 8 et le deuxième conducteur électrique 12 conduisent le courant de foudre qui a frappé le corps électriquement conducteur 4. L'amorçage des deux éclateurs 10 et 34 survenant rapidement, la majorité de l'onde de courant de foudre, donc de l'énergie à dissiper, se partage entre les deux circuits formés respectivement par le conducteur 8, qui n'est pas isolé, et par le deuxième conducteur 12, qui est faiblement isolé. Dans ces conditions, la tenue du paratonnerre au courant de foudre est la somme de la tenue de l'éclateur principal 10 et de l'éclateur secondaire 34. Par exemple, si les deux éclateurs 10 et 34 ont chacun eu un courant de décharge maximum de 100 kA, l'ensemble a un courant de décharge maximum de 200 kA. Il est donc avantageux que les courants de décharge maximum des deux éclateurs principal 10 et secondaire 34 soient du même ordre de grandeur, car cela facilite la répartition du courant de décharge dans les deux conducteurs électriques 8 et 12. Par « du même ordre de grandeur », on entend qu'un rapport entre les courants de décharge maximum des deux éclateurs 10 et 34 est compris entre 1 et 3.

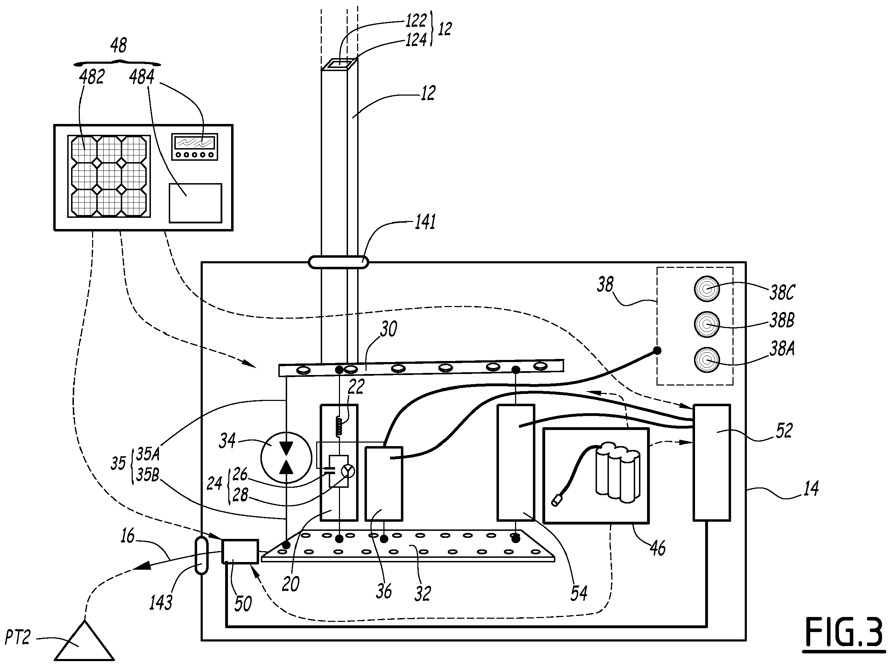

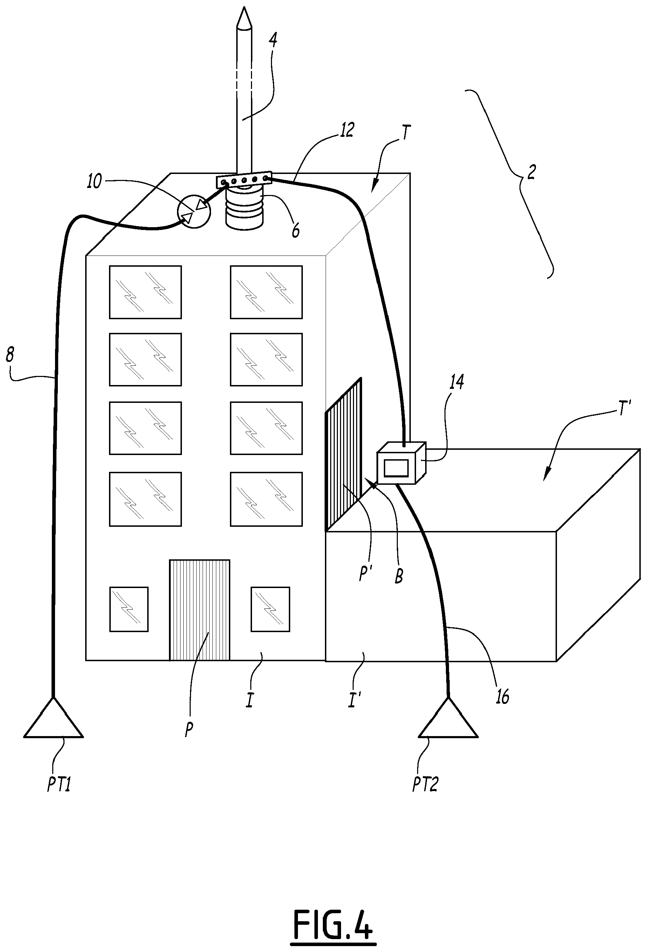

Dans les deuxième et troisième modes de réalisation représenté aux figures 3 et 4, les éléments analogues à ceux du premier mode de réalisation portent les mêmes références. Si une référence est utilisée sur l'une de ces figures 3 et 4 sans être mentionnée dans la description, elle concerne le même objet que celui du premier mode de réalisation qui porte la même référence. À l'inverse, si une référence est utilisée dans la description au sujet du deuxième ou troisième mode de réalisation sans être portée ni sur la figure 3 ni sur la figure 4, elle désigne l'objet du premier mode de réalisation qui porte la même référence. Dans ce qui suit, on décrit principalement ce qui distingue ces deuxième et troisième modes de réalisation du premier mode de réalisation.

Dans le deuxième mode de réalisation, le dispositif de test 36 est connecté entre la barrette 32 et un point de mesure particulier du circuit de commande 20, comme par exemple la capacité 26. En outre, le compteur de coups de foudre 50 est installé sur le conducteur électrique 16, à l'intérieur du coffret 14, entre la barrette 32 et une traversée de cloison équipée d'un deuxième joint d'étanchéité 143.

Dans le troisième mode de réalisation représenté à la figure 4, le coffret 14 du paratonnerre 2 est installé à la base de l'immeuble I, sur une terrasse T' d'un immeuble I' qui jouxte l'immeuble 1 sur lequel sont installés le corps électriquement conducteur 4 et le support isolant 6. La terrasse T' est accessible à travers une porte P'. La porte P' peut être équipée d'un moyen de contrôle d'accès, tel qu'une serrure, ce qui permet de limiter l'accès au coffret 14 aux seules personnes autorisées. En variante, la porte est équipée d'un autre moyen de contrôle d'accès, tel qu'un digicode. Selon une autre variante, la base B est située sur une terrasse de l'immeuble I. Le coffret 14 de ce mode de réalisation peut être selon l'une des figures 2 et 3.

Les modes de réalisation des figures 1 à 3 peuvent être privilégiés lorsque l'immeuble 1 est situé dans une zone d'accès contrôlée, par exemple au sein d'un établissement industriel ou d'une propriété privée, de sorte que le coffret 14 n'est pas accessible à tout le monde. Dans ce cas, l'opérateur n'a pas besoin d'avoir la clef d'une serrure de la porte P. Le mode de réalisation de la figure 3 peut être privilégié dans le cas d'une installation en ville pour éviter que le coffret 14 ne soit disposé sur/ou au niveau d'un trottoir de la voie publique, à la base B de l'immeuble I.

Quel que soit le mode de réalisation, le paratonnerre 2 comprend les éléments 4 à 16 et les éléments inclus dans, ou associés au, coffret de protection 14.

Quel que soit le mode de réalisation, le fait de monter le corps électriquement conducteur 4 et le circuit de limitation et de contrôle 20 respectivement en partie supérieure de l'immeuble 1 et à la base de celui-ci facilite les opérations de contrôle et de maintenance du fonctionnement du paratonnerre 2, au niveau du circuit 20.

En outre, l'invention permet de rétrofiter facilement un paratonnerre existant qui compte uniquement des éléments comparables aux éléments 4, 8 et PT1 de la présente invention. En effet, dans ce cas, il suffit d'installer les éléments 6, 10, 12, 14, 16 et PT2, avec le coffret 14 et les éléments qu'il contient montés à la base d'un immeuble, pour transformer un paratonnerre classique en un paratonnerre à dispositif d'amorçage facile à contrôler et à entretenir. Il est aussi possible de rétrofiter une installation comprenant déjà un corps électriquement conducteur 4, deux conducteurs 8 et des prises de terre PT1 et PT2. Il suffit alors de remplacer un des conducteurs 8 par un conducteur 12 avec âme 122 et gaine isolante 124 et d'installer les éléments 6, 10, 14 et 16. Dans le cas où le paratonnerre existant est fixé par des pattes de fixation ou des haubans, ils doivent d'abord être isolés avec des haubans en fibres de verre ou des manchons PVC insérés entre le corps électriquement conducteur 4 et les fixations, comme mentionné ci-dessus.

En variante, la structure qui supporte le paratonnerre 2 est différente d'un immeuble. Il peut s'agir d'un pylône, d'une grue, d'une charpente, d'un édicule ou de la façade d'une structure. Dans ce cas, la partie supérieure sur laquelle est monté le corps électriquement conducteur est un élément de la structure et la base est généralement située au niveau du sol.

L'invention est représentée dans le cas où le corps électriquement conducteur comprend une pointe 42 et un élément cylindrique 44. Elle est toutefois applicable avec d'autres formes de corps électriquement conducteur, notamment celles représentées aux figures 5 et 6 de WO-A-02/43216.

En variante, et quel que soit le mode de réalisation, l'éclateur secondaire 34 peut être réalisé dans l'air, sous la forme de deux électrodes qui se font face avec une distance compatible avec la tension d'amorçage nominale désirée, qui est par exemple de l'ordre de 5 kV. Cette tension d'amorçage est, là encore, strictement supérieure à la tension de sortie maximale du circuit 20. Dans cette variante, l'éclateur secondaire 34 peut être installé en dehors du coffret 14, par exemple dans un coffret dédié, contigu au coffret 14.

En variante et quel que soit le mode de réalisation, lorsqu'il est présent, le compteur de coups de foudre 50 peut être installé en dehors du coffret 14, sur le conducteur 12 entre la barrette 18 et la traversée de cloison équipée du premier joint d'étanchéité 141, ou sur le conducteur 16, entre traversée de cloison équipée du deuxième joint d'étanchéité 143 et la deuxième prise de terre PT2.

Selon une autre variante applicable à tous les modes de réalisation, il est possible d'utiliser, à la place du conducteur faiblement isolé 12, un conducteur isolé conforme à la norme IEC 62561-8 des composants de système de protection foudre isolés, donc dont la partie isolante est plus isolante que celle du conducteur faiblement isolé 12. Dans ce cas, le conducteur 8 est, de façon préférentielle, également conforme à cette norme. Dans ce cas, il est alors intéressant que le conducteur 16 soit également un conducteur isolé, notamment dans le cas de la figure 4 où le coffret 14 est relativement éloigné de la prise de terre PT2. Dans le cas de la figure 1, le coffret 14 est plus proche de la prise de terre PT2 et donc le conducteur 16 peut rester sans isolant. Si le conducteur 12 est un conducteur isolé normalisé, le support isolant 6 est de préférence également conforme à cette norme. Dans ce cas, sa hauteur peut être bien supérieure aux 10 cm mentionnés ci-dessus, par exemple entre 1,5 m et 2 m.

Les modes de réalisation et variantes mentionnés ci-dessus peuvent être combinées pour générer de nouveaux modes de réalisation, dans le cadre du jeu de revendications ci-joint.

## Revendications

1. Paratonnerre (2) à dispositif d'amorçage comprenant un corps (4) électriquement conducteur apte à émettre des décharges d'effluves formant un courant précurseur ascendant, le corps électriquement conducteur étant relié à la terre (PT1, PT2), en parallèle, d'une part, à travers un éclateur principal (10) et, d'autre part, à travers un circuit (20) de limitation et de contrôle d'un courant d'effluve circulant dans le corps électriquement conducteur, ce circuit de limitation et de contrôle (20) comprenant, en série, une inductance (22) et une ensemble (24) formé, en parallèle, d'une condensateur (26) et d'un éclateur de limitation (28), **caractérisé en ce que**
- le corps électriquement conducteur (4) et le circuit de limitation et de contrôle (20) sont séparés spatialement en étant respectivement montés en partie supérieure (T) d'une structure de support (I) et à la base (B) de la structure de support, qui supporte le paratonnerre,
- le corps électriquement conducteur (4) et le circuit de limitation et de contrôle (20) sont reliés par un premier conducteur isolé (12) comprenant une âme (122) en matériau électriquement conducteur recouverte d'un isolant (124) et
- un éclateur secondaire (34) est raccordé entre le premier conducteur isolé (12) et la terre (PT2), en parallèle du circuit de limitation et de contrôle, à travers un deuxième conducteur (16).

2. Paratonnerre selon la revendication 1, **caractérisé en ce que** le circuit de limitation et de contrôle (20) est disposé à l'intérieur d'un coffret de protection (14) fixé à la base (B) de la structure de support.

3. Paratonnerre selon la revendication 2, **caractérisé en ce que** l'éclateur secondaire (34) est disposé à l'intérieur du coffret de protection (14).

4. Paratonnerre selon l'une des revendications 2 ou 3, **caractérisé en ce que** le coffret de protection (14) contient également au moins
- un dispositif (36) de test du circuit de limitation et de contrôle (20), et/ou
- un compteur (50) de chocs de foudre reçus par le paratonnerre sur une période donnée et/ou
- un module de communication (52).

5. Paratonnerre selon la revendication 4, **caractérisé en ce qu'**il comprend un module (46) de batteries et/ou un système photovoltaïque (48) d'alimentation électrique du dispositif de test (36), du compteur (50) de chocs de foudre et/ou ou du module de communication (52).

6. Paratonnerre selon l'une des revendications 4 ou 5, **caractérisé en ce que** le coffret de protection (14) porte, en façade, un afficheur (38) d'un état détecté par le dispositif de test (36), de préférence sous la forme de diodes électroluminescentes (38A, 38B, 38C) de couleurs différentes.

7. Paratonnerre selon l'une des revendications 1 à 3, **caractérisé en ce qu'**il comprend un compteur de coups de foudre (50) disposé sur le premier conducteur (12) ou sur le deuxième conducteur (16).

8. Paratonnerre selon l'une des revendications précédentes, **caractérisé en ce que** la tension d'amorçage nominale de l'éclateur secondaire (34) est strictement supérieure à la tension maximale de sortie du circuit de limitation et de contrôle (20).

9. Paratonnerre selon l'une des revendications précédentes, **caractérisé en ce que** la tension d'amorçage nominale de l'éclateur secondaire (34) est du même ordre de grandeur que la tension d'amorçage nominale de l'éclateur principal (10).

10. Paratonnerre selon l'une des revendications précédentes, **caractérisé en ce que** le courant de décharge maximum de l'éclateur secondaire (34) est du même ordre de grandeur que le courant de décharge maximum de l'éclateur principal (10).

11. Structure équipée d'un paratonnerre (2) selon l'une des revendications précédentes, dans laquelle le corps électriquement conducteur (4) est monté en partie supérieure (T) de la structure et le circuit de limitation et de contrôle (20) est monté à la base (B) de la structure.

12. Structure selon la revendication 11, dans laquelle la structure est un immeuble (I), la partie supérieure sur laquelle est monté le corps électriquement conducteur est le toit (T) de l'immeuble et la base (B), au niveau de laquelle est monté le circuit de limitation et de contrôle (20), est située au pied de l'immeuble.

13. Structure selon la revendication 11, dans laquelle la structure est un immeuble (I), la partie supérieure sur laquelle est monté le corps électriquement conducteur est le toit (T) de l'immeuble et la base (B), au niveau de laquelle est monté le circuit de limitation et de contrôle (20), est située sur une terrasse (T').

14. Structure selon la revendication 13, dans laquelle la terrasse (T') est accessible à travers une porte (P'), de préférence équipée d'un moyen de contrôle d'accès.

15. Structure selon la revendication 11, dans laquelle la structure est un pylône, une grue, une charpente, un édicule ou une façade et la partie supérieure sur laquelle est monté le corps électriquement conducteur est un élément de la structure et la base est située au niveau du sol.
